# EUROPEAN PATENT APPLICATION

(11) **EP 3 605 501 A1**
(43) Date of publication of application: **05.02.2020**
(21) Application number: 18777149.8
(22) Date of filing: 16.03.2018
(51) Int. Cl.: G08G 1/16, B60R 21/00, G02B 27/01

(54) **ATTENTION-CALLING APPARATUS**

(30) Priority: 31.03.2017 JP 2017069457
(71) Applicant: Nippon Seiki Co., Ltd., Nagaoka-shi, Niigata 940-8580 (JP)
(72) Inventor: HADA Makoto, Nagaoka Niigata (JP); YACHIDA Takeshi, Nagaoka Niigata (JP); SEKIYA Shun, Nagaoka Niigata (JP); MASUYA Yuki, Nagaoka Niigata (JP)
(74) Representative: Jackson, Richard Eric
(86) International application number: PCT/JP2018/010467
(87) International publication number: WO 2018/180597

(57) **Abstract**

The present invention enables prevention of collision with a forward obstacle by prompting an appropriate driving operation in accordance with the relative speed or the relative distance between a host vehicle and the forward obstacle. A virtual image display unit 20 displays a virtual image V for an object W in a real scene 3 ahead of the vehicle. A display control unit 30 causes the virtual image V to be displayed at a correction display position 50c closer to the upper side in the vertical direction and/or a deep side in the depth direction when viewed from a viewer E, than a standard display position 50n at which the virtual image V is normally displayed in association with the object W in the real scene 3 ahead of a host vehicle 1, in accordance with the relative speed or the relative distance between the host vehicle 1 and the object W in the real scene 3.

## Description

### TECHNICAL FIELD

The present invention relates to an attention-calling apparatus which displays a virtual image indicating warning information to the occupant of a vehicle, thereby preventing collision with an obstacle ahead of the vehicle.

### BACKGROUND ART

As a conventional attention-calling apparatus, a device which gives warning by using a head-up display device as disclosed in Patent Document 1 is known. The attention-calling apparatus disclosed in Patent Document 1 detects a distance between a host vehicle and a forward vehicle located in front of the host vehicle, and performs superimposed display of a mark image on the forward vehicle in the driver's view by the head-up display device. By displaying the mark image, it is possible to notify a user of the position of an object (forward vehicle) to which attention should be paid.

Generally, the higher the relative speed between the host vehicle and the forward vehicle is (when the host vehicle is faster than the forward vehicle), or the shorter the relative distance between the host vehicle and the forward vehicle is, time available for avoidance of collision with the forward vehicle in case of an emergency situation is short. For example, in a case where the relative speed is higher than a predetermined threshold, or the relative distance is shorter than a predetermined threshold, particularly strong attention calling is required. As in the above case, for a case where particularly strong attention calling is to be performed, Patent Document 2 describes an attention-calling apparatus which changes the color of a mark image in performing the strong attention calling.

### PRIOR ART DOCUMENT

### PATENT DOCUMENT

Patent Document 1: Japanese Unexamined Patent Application Publication No. H8-94756
Patent Document 2: Japanese Unexamined Patent Application Publication No. 2006-175936

### SUMMARY OF THE INVENTION

### PROBLEMS TO BE SOLVED BY THE INVENTION

However, even if a display mode such as the color or size of the mark image is changed, it is difficult for the driver to ascertain whether to keep on steering or to perform a braking maneuver and thus there is room for improvement in a method for attention calling.

An object of the present invention is to provide an attention-calling apparatus capable of prompting an appropriate driving operation and preventing collision with a forward obstacle.

### SOLUTION TO PROBLEM

The present invention has adopted the following means in order to solve the above problems.

The attention-calling apparatus of the present invention displays, according to a relative speed or a relative distance between a host vehicle and an object (forward obstacle) in a real scene, a virtual image at a position closer to the upper side in the vertical direction or/and a deep side in the depth direction than a standard display position where the virtual image is to be normally displayed in association with the object in the real scene ahead of the vehicle. By doing so, the virtual image by which the driver's attention is called is visually recognized as being substantially on the deeper side than a position where the virtual image for triggering normal attention calling is displayed. As a result, the aim is that the driver can be made to recognize that he/she is close to the object than usual, or feel as if he/she is close to the object than usual, and thus the driver can be prompted to perform an early driving operation or a driving operation of a sufficient operation amount, enabling prevention of collision with the forward obstacle.

The attention-calling apparatus according to a first aspect of the present invention comprises: a virtual image display unit (20) which displays a virtual image (V) associated with an object (W) in a real scene (3) ahead of a vehicle, in which the virtual image (V) causes attention to be directed toward the object; a display control unit (30) which adjusts a display position of the virtual image displayed by the virtual image display unit; and object position acquisition means (33, 35, 37) for acquiring a position of the object, in which the display control unit executes normal display processing of displaying the virtual image at a standard display position (50n) determined according to the position of the object, and highlighting processing of displaying a distant virtual image Vc at a correction display position (50c) located closer to an upper side in a vertical direction or/and a deep side in a depth direction of the standard display position.

### BRIEF DESCRIPTION OF THE DRAWINGS

FIG. 1 is a diagram for explaining the configuration of an attention-calling apparatus according to an embodiment of the present invention.
FIG. 2A is an illustration for explaining a virtual image to be displayed by the attention-calling apparatus of FIG. 1. (a) is a view showing a scene visually recognized by a driver of a vehicle, and (b) is a view showing the state as seen from a lateral side of the vehicle.
FIG. 2B is an illustration for explaining a virtual image to be displayed by the attention-calling apparatus of FIG. 1. (a) is a view showing a scene visually recognized by the driver of the vehicle, and (b) is a view showing the state as seen from the lateral side of the vehicle.
FIG. 2C is an illustration for explaining a virtual image to be displayed by the attention-calling apparatus of FIG. 1. (a) is a view showing a scene visually recognized by the driver of the vehicle, and (b) is a view showing the state as seen from the lateral side of the vehicle.
FIG. 3 is a graph showing the relationship between relative speed and variation of a correction display position in the attention-calling apparatus of FIG. 1.
FIG. 4 is an illustration for explaining an intermediate virtual image to be displayed by the attention-calling apparatus of FIG. 1.
FIG. 5 is an illustration showing examples of a display mode of the intermediate virtual image displayed by the attention-calling apparatus of FIG. 1.

### MODE FOR CARRYING OUT THE INVENTION

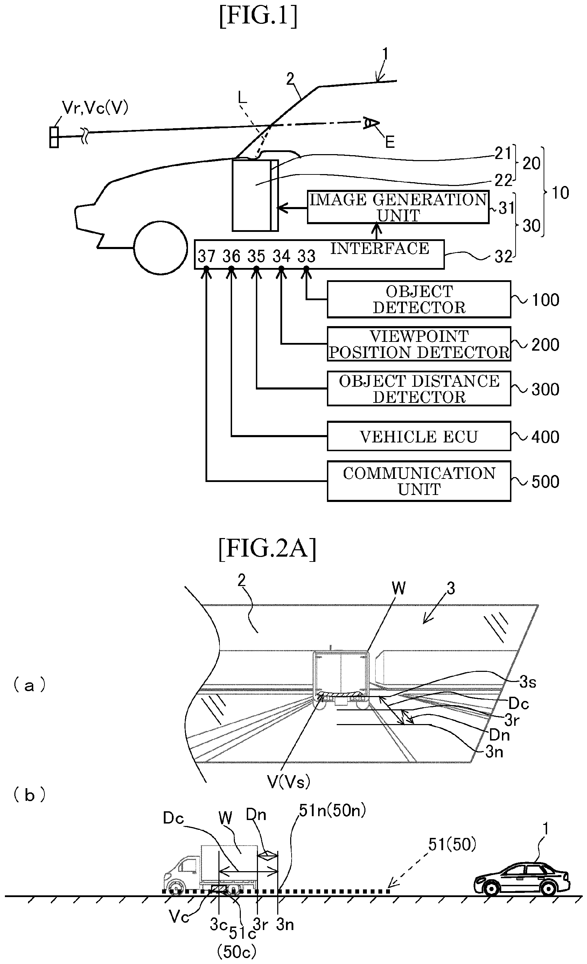

An embodiment of an attention-calling apparatus 10 of the present invention will be described with reference to FIG. 1.

The attention-calling apparatus 10 is, for example, a head-up display device or a head-mounted display device for displaying a virtual image V. Hereinafter, an embodiment in which the attention-calling apparatus 10 is a head-up display device will be described.

The attention-calling apparatus 10 is mounted in a host vehicle 1, and includes a display unit 21 which displays an image, and a projection unit 22 which causes a driver E to visually recognize a virtual image V by projecting the image displayed by the display unit 21 on a front windshield 2. The attention-calling apparatus 10 is configured from a virtual image display unit 21 which displays the virtual image V, and a display control unit 30 capable of controlling the position of the virtual image V displayed by the virtual image display unit 21.

The attention-calling apparatus 10 acquires various kinds of information from an object detector 100, a viewpoint position detector 200, an object distance detector 300, a vehicle ECU 400, a communication unit 500, and the like, which will be described later, and changes the position of the image displayed by the display unit 21 on the basis of the above kinds of information, thereby changing the position of the virtual image V visually recognized by the driver E. As the attention-calling apparatus 10 displays the virtual image V in association with a specific object W in a real scene 3 ahead of the host vehicle 1, the attention-calling apparatus 10 emphasizes the presence of the object W, and prompts a braking maneuverof avoiding collision with the object W. In the following, although the virtual image V whereby attention is called to the presence of the object W will be explained, the attention-calling apparatus 10 may also display virtual images V corresponding to vehicle information on the host vehicle 1, route guidance, and the like. Also, the virtual image display unit 21 may change the position of the virtual image V visually recognized by the driver E by driving the projection unit 22.

Now, various detectors 100 to 500 provided in the host vehicle 1 will be described. Note that the various detectors 100 to 500 described herein may be provided in the attention-calling apparatus 10. Also, the various detectors 100 to 500 may be detachably connected to the attention-calling apparatus 10. For example, the various detectors 100 to 500 may be connected by wire or connected wirelessly to an interface 32, which will be described later, of the attention-calling apparatus 10.

The object detector 100 acquires position information on the object W in the real scene 3 ahead of the host vehicle 1. The position information includes position information on the object W to which attention is called by the display of the virtual image V in the up-and-down and right-and-left directions or/and the depth direction of the object W, in the real scene 3 ahead of the host vehicle 1, and is obtained by, for example, one or more cameras, an infrared sensor, LIDAR (Light Detection Ranging), or the like. The object W is, for example, an obstacle existing on or near a road surface, more specifically, a preceding vehicle, a pedestrian, a building, or the like. The object detector 100 may be configured such that a relative distance between the host vehicle 1 and the object W can be measured from information regarding the position of the object W. Also, the object detector 100 may be configured such that a relative speed between the host vehicle 1 and the object W can be detected on the basis of temporal change in the information regarding the position of the object W. In other words, the object detector 100 outputs the position information, the relative distance (relative information), and the relative speed (relative information) to the interface 32 (information input unit 33) of the attention-calling apparatus 10.

The viewpoint position detector 200 acquires viewpoint information regarding the viewpoint position of the driver E. The viewpoint information includes at least the position information on the viewer's viewpoint in the up-and-down direction, and may include the position information in the right-and-left direction and the depth direction. The viewpoint information is obtained from, for example, a camera, an infrared camera, and the like. The attention-calling apparatus 10 can display the virtual image V with good positional accuracy relative to the object W by adjusting the position at which the virtual image V is to be displayed, on the basis of the position information regarding the position of the object W in the real scene 3 obtained from the object detector 100, and the viewpoint information regarding the position of the viewpoint of the driver E obtained from the viewpoint position detector 200. Note that the viewpoint position detector 200 may be structured to infer the position of the viewpoint of the driver E by detecting the position of the nose, the position of the head, the position of the seat, the height of the sitting height, etc., instead of directly detecting the viewpoint of the driver E.

The object distance detector 300 is a distance measurement sensor which measures the relative distance between the host vehicle 1 and the object W, and is configured from, for example, a distance measurement camera, a radar sensor, and the like. The object distance detector 300 can individually recognize a plurality of objects W that exist ahead of the host vehicle 1. By continuously or intermittently detecting the relative distance between the host vehicle 1 and the individual objects W, and performing comparison such as the time subtraction of the aforementioned elements, the relative speed between the host vehicle 1 and the object W with reference to the speed of the host vehicle 1 can be calculated. In other words, the object distance detector 300 outputs the relative information including the relative distance between the host vehicle 1 and each of the objects W, and the relative speed to the interface 32 (information input unit 35) of the attention-calling apparatus 10.

The vehicle ECU 400 is an ECU provided in the host vehicle 1, and outputs vehicle speed information on the host vehicle 1, and braking information regarding a braking operation of the host vehicle 1 to the interface 32 (information input unit 36) of the attention-calling apparatus 10. Note that the display control unit 30 to be described later can determine that the host vehicle 1 has performed the braking operation in a case where the relative distance between the host vehicle 1 and the object W has increased at a certain rate or suddenly, in addition to when the braking information is input from the vehicle ECU 400.

The communication unit 500 can perform inter-vehicle communication or perform communication with a communication infrastructure on the road. The communication unit 500 outputs, via the inter-vehicle communication or the communication infrastructure on the road, speed information on the object W, the relative information including the relative distance between the host vehicle 1 and the object W, or the relative speed obtained by the time subtraction of the aforementioned elements, the position information regarding the position of the object W in the real scene 3, and the like, to the interface 32 (information input unit 37) of the attention-calling apparatus 10. Note that the display control unit 30 to be described later can also obtain the relative speed between the host vehicle 1 and the object W, on the basis of the vehicle speed information on the host vehicle 1 from the vehicle ECU 400, and the speed information on the object W from the communication unit 500.

As shown in FIG. 1, the display control unit 30 includes an image generation unit 31 which generates or adjusts the image displayed by the display unit 21, and the interface 32. The interface 32 includes: the information input unit 33 for mainly inputting, via a network such as an on-vehicle LAN not shown, the position information including information regarding at least the position of the object W from the object detector 100; an information input unit 34 for mainly inputting the viewpoint information regarding the viewpoint position of the driver E from the viewpoint position detector 200; the information input unit 35 for mainly inputting the relative information including the relative distance or/and the relative speed between the host vehicle 1 and the object W from the object distance detector 300; the information input unit 36 for mainly inputting the vehicle speed information on the host vehicle 1 and the braking information regarding the braking operation of the host vehicle 1 from the vehicle ECU 400; and the information input unit 37 for inputting, from the communication unit 500, the speed information on the object W, and the relative information including the relative distance between the host vehicle 1 and the object W, and the relative speed obtained by the time subtraction of the aforementioned elements. The interface 32 may input the above various kinds of information by serial input instead of parallel input. In other words, the interface 32 functions as object position acquisition means for acquiring the position information including information regarding at least the position of the object W, relative information acquisition means capable of acquiring the relative information including at least one of the relative speed and the relative distance between the object W and the host vehicle 1, and braking information acquisition means capable of acquiring the braking information regarding the braking operation of the host vehicle 1.

Normally, the image generation unit 31 displays the virtual image V to be substantially visually recognized at a standard position 3n in the real scene 3 having a predetermined positional relationship with respect to the object W in the real scene 3, on the basis of the position information and the viewpoint information input from the interface 32. The predetermined positional relationship includes positional relationships such a positional relationship in which the virtual image V is seen to be superimposed on the object W, a positional relationship in which the virtual image V is seen to be offset from the object W in the up-and-down and right-and-left directions by a predetermined distance, a positional relationship in which the virtual image V is seen at a position offset from the object W in the depth direction in real space by a predetermined distance, and a positional relationship in which the virtual image V is substantially seen to be offset from the object W in the depth direction in real space by a predetermined distance.

The display control unit 30 executes "highlighting processing" of changing the position where the virtual image V is to be displayed in a virtual image displayable area 50 in which the virtual image V can be displayed from a normal standard display position 50n to a correction display position 50c, when the relative speed between the object W and the host vehicle 1 is greater than or equal to a predetermined threshold or the relative distance is less than or equal to a predetermined threshold.

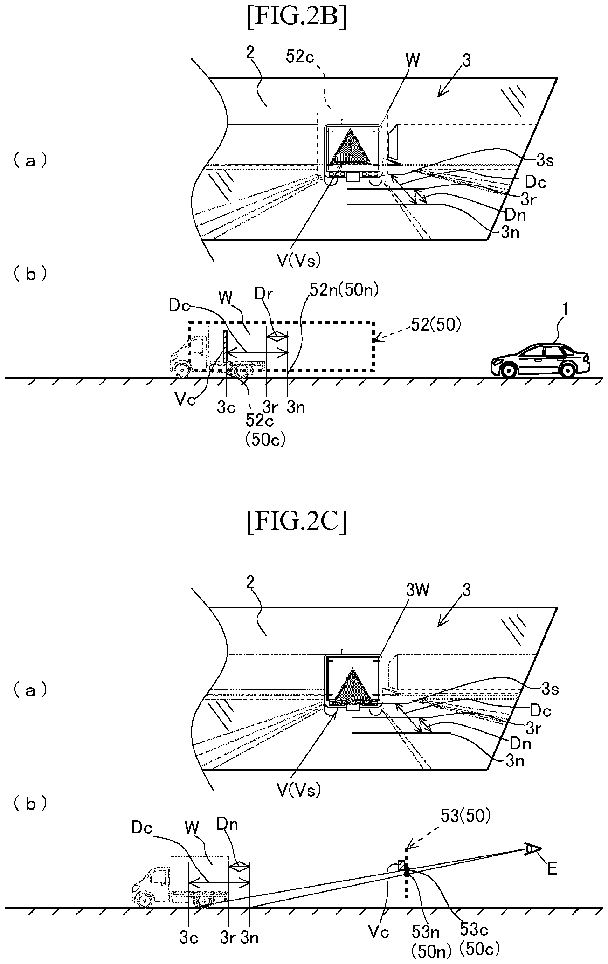

When the highlighting processing is executed, the display control unit 30 causes the virtual image V to be visually recognized as being at a more distant place (a position away from the driver E) than normally is. In the following, the virtual image V which is displayed at a more distant place than normally is, or is visually recognized as substantially being at a distant place when the highlighting processing is executed is called a distant virtual image Vc. Specifically, the way in which the distant virtual image Vc is displayed will be explained with reference to FIGS. 2A, 2B, and 2C. As shown in FIGS. 2A and 2B, normally, the display control unit 30 displays the virtual image V at the standard display position 50n, and displays the distant virtual image Vc at the correction display position 50c located at a more distant place than the standard display position 50n (a farther position relative to the driver E), when the highlighting processing is executed. Consequently, when the highlighting processing is executed, the virtual image V is displayed at a more distant place than normally is. Also, as shown in FIG. 2C, normally, the display control unit 30 displays the virtual image V at the standard display position 50n, and displays the distant virtual image Vc at the correction display position 50c located closer to the upper side in the vertical direction than the standard display position 50n, when the highlighting processing is executed. Thereby, when the highlighting processing is executed, the distant virtual image Vc, which is displayed in the correction display position 50c, is recognized by the driver E as substantially being at a distant position as compared to the virtual image V displayed in the standard display position 50n.

FIG. 2A shows an example in which the virtual image displayable area 50 where the attention-calling apparatus10 can display the virtual image V is a first virtual image displayable area 51 of a planar shape extending from a near side to a distant side. In this case, the display control unit 30 can adjust the position at which the virtual image V is to be displayed in the depth direction and the right-and-left direction as seen from the driver E within the first virtual image displayable area 51. The display control unit 30 displays the virtual image V at a first standard display position 51n within the first virtual image displayable area 51 corresponding to the standard position 3n, such that the visual recognition is performed at the standard position 3n closer to the driver E by a distance Dn from a reference position 3r where the object W exists, when performing normal attention calling (during execution of normal display processing). Further, the display control unit 30 displays the distant virtual image Vc at a first correction display position 51c within the first virtual image displayable area 51 corresponding to a correction position 3c, such that the visual recognition is performed at the correction position 3c away from the driver E by a distance Dc from the standard position 3n during execution of the highlighting processing. Note that the distant virtual image Vc, which is to be displayed during execution of the highlighting processing, is displayed (formed) at a position more distant from the driver E than an end portion of the object W that is closest to the driver E. That is, in the case of normal attention calling, the virtual image V is displayed closer to the driver E than the object W. However, when the highlighting processing is to be executed, the distant virtual image Vs is displayed at a position more distant from the driver E than the object W. As a result, the driver E can be made to recognize that a distance between the host vehicle 1 and the object W is shorter than usual, and the braking operation of the host vehicle 1 can be prompted so as to increase the distance.

FIG. 2B shows an example in which the virtual image displayable area 50 where the attention-calling apparatus 10 can display the virtual image V is a second virtual image displayable area 52 of a stereoscopic shape extending from the near side to the distant side. In this case, the display control unit 30 can adjust the position at which the virtual image V is to be displayed in the depth direction, the up-and-down direction, and the right-and-left direction as seen from the driver E within the second virtual image displayable area 52. The display control unit 30 displays the virtual image V at a second standard display position 52n within the second virtual image displayable area 52 corresponding to the standard position 3n, such that the visual recognition is performed at the standard position 3n closer to the driver E by the distance Dn from the reference position 3r where the object W exists, when performing the normal attention calling (during execution of the normal display processing). Further, the display control unit 30 displays the distant virtual image Vc at a second correction display position 52c within the second virtual image displayable area 52 corresponding to the correction position 3c, such that the visual recognition is performed at the correction position 3c away from the driver E by the distance Dc from the standard position 3n during execution of the highlighting processing. Note that the distant virtual image Vc, which is to be displayed during execution of the highlighting processing, is displayed (formed) at a position more distant from the driver E than an end portion of the object W that is closest to the driver E. That is, in the case of normal attention calling, the virtual image V is displayed closer to the driver E than the object W. However, when the highlighting processing is to be executed, the distant virtual image Vs is displayed at a position more distant from the driver E than the object W. As a result, the driver E can be made to recognize that a distance between the host vehicle 1 and the object W is shorter than usual, and the braking operation of the host vehicle 1 can be prompted so as to increase the distance.

FIG. 2C shows an example in which the virtual image displayable area 50 where the attention-calling apparatus 10 can display the virtual image V is a third virtual image displayable area 53 of a planar shape extending in the up-and-down and right-and-left directions. In this case, the display control unit 30 can adjust the position at which the virtual image V is to be displayed in the up-and-down direction and the right-and-left direction as seen from the driver E within the third virtual image displayable area 53. The display control unit 30 displays the virtual image V at a third standard display position 53n within the third virtual image displayable area 53 corresponding to the standard position 3n, such that the visual recognition is performed in a superimposed manner on the standard position 3n closer to the driver E by the distance Dn from the reference position 3r where the object W exists, when performing the normal attention calling. Further, the display control unit 30 displays the distant virtual image Vc at a third correction display position 53c located closer to the upper side in the vertical direction than the third standard display position 53n, such that the visual recognition is performed in a superimposed manner on the correction position 3c away from the driver E by the distance Dc from the standard position 3n during execution of the highlighting processing. When the highlighting processing is executed, the distant virtual image Vs is superimposed on a position more distant from the driver E than a position where the virtual image V is superimposed when the normal attention calling is performed. As a result, the driver E can be made to recognize that a distance between the host vehicle 1 and the object W is shorter than usual, and the braking operation of the host vehicle 1 can be prompted so as to increase the distance.

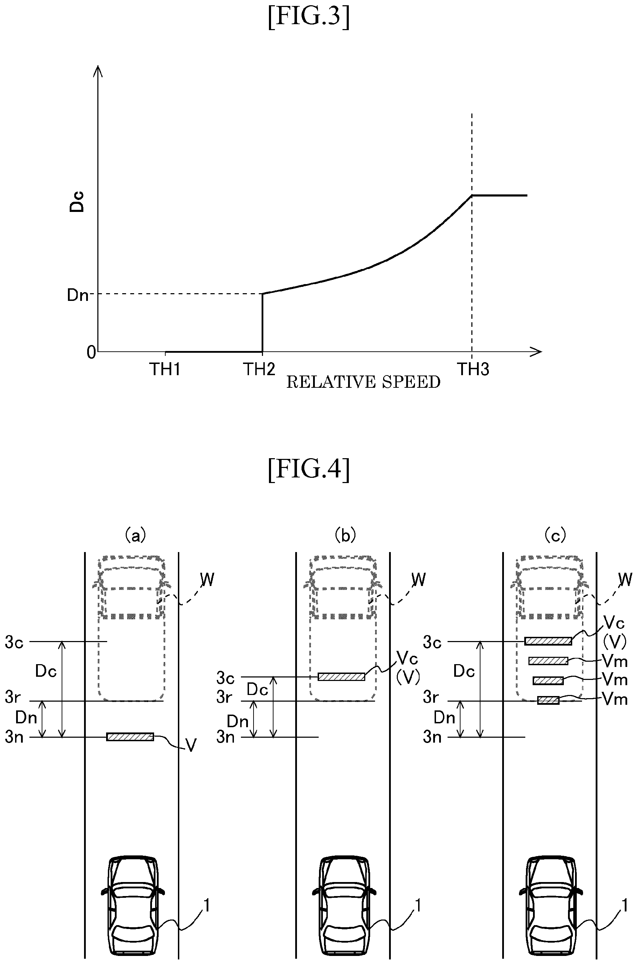

FIG. 3 is a graph showing the relationship between the relative speed, between the host vehicle 1 and the object W, and the distance Dc corresponding to a variation between the normal standard display position 50n and the correction display position 50c. For example, when the relative speed is less than a first threshold TH1, the display control unit 30 does not display the virtual image V associated with the object W. When the relative speed is greater than or equal to the first threshold TH1 and less than a second threshold TH2, the display control unit 30 continues displaying the virtual image V at the standard display position 50n closer to the driver E by the distance Dn from the object W, regardless of increase in the relative speed. Furthermore, when the relative speed reaches the second threshold TH2, the display control unit 30 displays the distant virtual image Vs at the reference position 3r where the end portion of the object W closest to the driver E is located. When the relative speed is greater than or equal to the second threshold TH2, the correction display position 50c is gradually moved away from the standard display position 50n, on the basis of the increase in the relative speed. When the relative speed is greater than or equal to a third threshold TH3, the correction display position 50c is maintained.

As explained above, the attention-calling apparatus 10 according to the first aspect of the present embodiment is an attention-calling apparatus that displays the virtual image V associated with the object W in the real scene 3 ahead of the vehicle. The attention-calling apparatus comprises: the information input unit 33 (37) which acquires position information including information regarding at least a position of the object W; the information input unit 33 (35, 36, 37) capable of acquiring relative information including at least one of the relative speed and the relative distance between the object W and the host vehicle 1; and a display control unit 30 which sets the correction display position 50c to be closer to the upper side in the vertical direction than the standard display position 50n, which is the normal position of displaying the virtual image V determined according to the position of the object W acquired by the information input unit 33 (35, 36, 37) or/and the deep side in the depth direction, on the basis of the relative information acquired by at least the information input unit 33 (35, 36, 37), and displays the distant virtual image Vc at the correction display position 50c. Consequently, the distant virtual image Vc by which the driver's attention is called is visually recognized as being on a deep side relative to the object W (the position away from the driver). For this reason, the driver E can be made to recognize that a distance between the host vehicle 1 and the object W is shorter than usual, and the braking operation of the host vehicle 1 can be prompted so as to increase the distance, thereby preventing collision with a forward obstacle (object W).

In addition, the display control unit 30 may continuously update the correction display position 50c. By the above, since the display position of the distant virtual image Vc is updated as needed in accordance with a change of the relative speed between the host vehicle 1 and the object W in the real scene 3 or a change of the relative distance, the driving operation can be adjusted appropriately while checking the display position of the distant virtual image Vc.

Further, the display control unit 30 may update the correction display position 50c every predetermined time, and determine the correction display position 50c on the basis of the maximum value of the relative speed or the minimum value of the relative distance in the predetermined time. For example, the display control unit 30 may receive the relative speed in a period of the predetermined time several times to determine the correction display position 50c at which the distant virtual image Vc is displayed, on the basis of the maximum values of these relative speeds. In this way, it is possible to prevent the display position (correction display position 50c) of the distant virtual image Vc from being frequently updated in accordance with a continuous change of the relative speed between the host vehicle 1 and the object W in the real scene 3 or a continuous change of the relative distance. Thus, it is possible to prevent the concentration of the driver E from being distracted, and also prompt the driver to perform an early driving operation or a driving operation of a sufficient operation amount by the display of the distant virtual image Vc.

In addition, preferably, the display control unit 30 should adjust the correction display position 50c such that the distant virtual image Vc is substantially visually recognized at the correction position 3c in the real scene that is away from the object W by a correction distance Dc, and change the correction distance Dc according to the relative information. By doing so, the distant virtual image Vc displayed at the correction display position 50c can be recognized more stereoscopically as if the distant virtual image Vc exists at a specific position (correction position 3c) away from the object W in real space of the real scene 3 by the correction distance Dc.

Also, the information input unit 36 (braking information acquisition means) capable of acquiring the braking information regarding the braking operation of the host vehicle 1 may further be provided, and the display control unit 30 may fix the correction distance Dc when the braking operation of the host vehicle 1 is detected, on the basis of the braking information acquired from the information input unit 36. Specifically, when the braking operation of the host vehicle 1 is detected, the display control unit 30 fixes the correction distance Dc to the latest correction distance Dc (the one when the braking operation is detected), and continuously updates the correction display position 50c at which the distant virtual image Vc is displayed so that the distant virtual image Vc is substantially continued to be visually recognized at a position away from the object W by the correction distance Dc. As described above, since a sense of distance between the object W and the distant virtual image Vc to be visually recognized is fixed when the braking operation of the host vehicle 1 is performed, the driver E can adjust the braking operation by taking the distant virtual image Vc as the standard. Note that after elapse of a predetermined time after the braking operation of the host vehicle 1 has been started (ended), the display control unit 30 updates the correction display position 50c according to the current (latest) relative information.

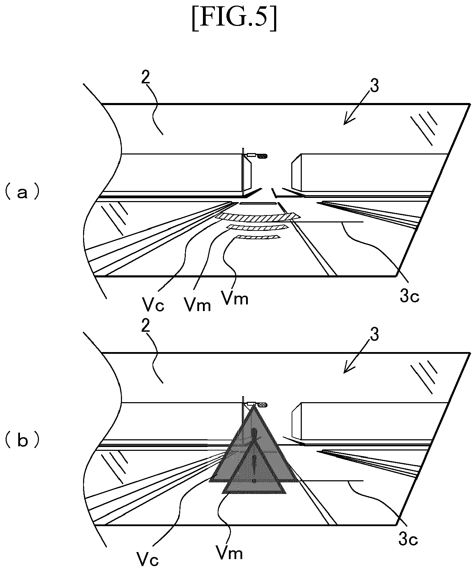

FIG. 4 is an illustration for explaining an intermediate virtual image Vm to be displayed by the attention-calling apparatus 10 of the present embodiment, and FIG. 5 is an illustration showing examples of a display mode of the intermediate virtual image Vm displayed by the attention-calling apparatus 10 of the present embodiment. When normal attention calling is to be performed, as shown in FIG. 4 (a), the attention-calling apparatus 10 of the present embodiment displays the virtual image V to be visually recognized at the standard position 3n closer to the driver E by the distance Dn from the reference position 3r where the object W exists. When highlighting processing is executed, as shown in FIG. 4 (b), the attention-calling apparatus 10 displays the distant virtual image Vc at the correction display position 50c located at a more distant place than the standard display position 50n (a farther position relative to the driver E).

The display control unit 30 may display, as shown in FIG. 4(c), one or more intermediate virtual images Vm at such a position that the intermediate virtual image Vm is visually recognized as substantially existing on the near side in the depth direction as compared to the distant virtual image Vc. In this way, the driver E can be made to recognize a difference in distance between the object W and the distant virtual image Vc. In other words, it is possible to make a stronger impression that the distant virtual image Vc is substantially displayed on the driver E side.

In addition, the display control unit 30 may increase the number of intermediate virtual images Vm to be displayed according to the relative information. Specifically, the display control unit 30 may increase the number of intermediate virtual images Vm in accordance with an increase in the correction distance Dc, based on which the distant virtual image Vc is substantially visually recognized away from the object W, and which is determined according to the relative information. By increasing or decreasing the intermediate virtual images Vm, it is possible to make the driver E easily recognize the increase or decrease of the difference in distance between the object W and the distant virtual image Vc.

Also, as shown in FIG. 5, the display control unit 30 may display the intermediate virtual image Vm and the distant virtual image Vc in substantially the same shape and in different display modes. By making the intermediate virtual image Vm and the distant virtual image Vc have the same shape, it is possible to make the driver E recognize that the intermediate virtual image Vm and the distant virtual image Vc are being displayed for the same object W. Further, by setting the intermediate virtual image Vm and the distant virtual image Vc in different display modes, the distant virtual image Vc can be easily distinguished from the intermediate virtual image Vm, whereby attention can be easily directed to the distant virtual image Vc.

In addition, as shown in FIG. 5, the display control unit 30 may display the intermediate virtual image Vm to be visually recognized larger than the distant virtual image Vc. Also by the above, it is possible to make the distant virtual image Vc easily distinguished from the intermediate virtual image Vm.

Further, the display control unit 30 may gradually cancel display or lower the visibility of the virtual images in the order of closeness to the host vehicle 1, in the order of the distant virtual image Vc and the intermediate virtual image Vm, as the host vehicle 1 approaches the object W. Consequently, it is possible to give the driver E the impression that the distant virtual image Vc is displayed closer to the driver E than the intermediate virtual image Vm.

Also, when the relative speed is not decreased or the relative distance is not increased for a predetermined time or more, the display control unit 30 may adjust the correction display position 50c to be located at the further upper side in the vertical direction or/and deeper side in the depth direction. As a result, when the driving operation is not improved for a predetermined time, since the distant virtual image Vc displayed at the correction display position 50c is visually recognized even more near to the driver E, it is possible to prompt the driver E to improve the driving operation.

Furthermore, when the relative speed is greater than or equal to the third threshold TH3 at which the correction display position 50c is maintained regardless of the increase in the relative speed, as described above, and the predetermined time or more has elapsed, the display control unit 30 may blink the distant virtual image Vc to call for stronger attention to the driver E.

Note that the present invention is not limited by the embodiments described above. Changes (including deletion of structural elements) may be made as appropriate without departing from the spirit of the present invention.

### DESCRIPTION OF REFERENCE NUMERALS

1 Host vehicle
2 Front windshield (Transmissive reflection unit)
3 Real scene
3n Standard position
3c Correction position
10 Attention-calling apparatus
20 Virtual image display unit
21 Display unit
22 Projection unit
30 Display control unit
31 Image generation unit
32 Interface (object position acquisition means, relative information acquisition means, braking information acquisition means)
33, 34, 35, 36, 37 Information input unit (object position acquisition means, relative information acquisition means, braking information acquisition means)
50 Virtual image displayable area
50n Standard display position
50c Correction display position
51 First virtual image displayable area
51n First standard display position
51c First correction display position
52 Second virtual image displayable area
52n Second standard display position
52c Second correction display position
53 Third virtual image displayable area
53n Third standard display position
53c Third correction display position
100 Object detector
200 Viewpoint position detector
300 Object distance detector
400 Vehicle ECU
500 Communication unit
D Correction distance
Dn Standard distance
E Driver
V Virtual image
Vm Intermediate virtual image
Vc Distant virtual image
W Object

## Claims

1. An attention-calling apparatus comprising:
a virtual image display unit (20) which displays a virtual image (V) associated with an object (W) in a real scene (3) ahead of a vehicle, the virtual image (V) causing attention to be directed toward the object;
a display control unit (30) which adjusts a display position of the virtual image displayed by the virtual image display unit; and
object position acquisition means (33, 35, 37) for acquiring a position of the object, wherein
the display control unit executes normal display processing of displaying the virtual image at a standard display position (50n) determined according to the position of the object, and highlighting processing of displaying the virtual image at a correction display position (50c) located closer to an upper side in a vertical direction or/and a deep side in a depth direction of the standard display position.

2. The attention-calling apparatus of claim 1, wherein the standard display position is set on a near side in the depth direction relative to the object, and
the correction display position is set on the deep side in the depth direction relative to the object.

3. The attention-calling apparatus of claim 1 or 2, wherein the display control unit updates the correction display position every predetermined time, and determines the correction display position on the basis of a maximum value of the relative speed or a minimum value of the relative distance in the predetermined time.

4. The attention-calling apparatus of any one of claims 1 to 3, wherein the display control unit adjusts the correction display position such that the distant virtual image is substantially visually recognized at a correction position (3c) in the real scene that is away from the object by a correction distance (Dc), and changes the correction distance according to the relative information.

5. The attention-calling apparatus of claim 4, further comprising braking information acquisition means (36) capable of acquiring braking information regarding a braking operation of a host vehicle, wherein
the display control unit fixes the correction distance when the braking operation of the host vehicle is detected, on the basis of the braking information acquired from the braking information acquisition means.

6. The attention-calling apparatus of any one of claims 1 to 5, wherein the display control unit displays one or more intermediate virtual images at a position that the intermediate virtual image is substantially visually recognized to exist between the object and the distant virtual image.

7. The attention-calling apparatus of claim 6, wherein the display control unit increases the number of intermediate virtual images to be displayed according to the relative information.

8. The attention-calling apparatus of claim 6 or 7, wherein the display control unit displays the intermediate virtual image and the distant virtual image in substantially same shape and in different display modes.

9. The attention-calling apparatus of any one of claims 6 to 8, wherein the display control unit displays the intermediate virtual image such that the intermediate virtual image is visually recognized smaller than the distant virtual image.

10. The attention-calling apparatus of any one of claims 1 to 9, wherein when the relative speed is not decreased or the relative distance is not increased for a predetermined time or more, the display control unit adjusts the correction display position at a position visually recognized on a further upper side in the vertical direction or/and a deeper side in the depth direction.
